(19) Europäisches Patentamt

European Patent Office

Office européen des brevets

(11) Publication number: **0 540 180 B1**

# EUROPEAN PATENT SPECIFICATION

(45) Date of publication of patent specification: **13.12.95** (51) Int. Cl.⁶: **C08F 10/00**

(21) Application number: **92308963.5**

(22) Date of filing: **01.10.92**

(54) Process for producing polyolefins

(30) Priority: **26.10.91 GB 9122791**
**22.11.91 GB 9124817**

(43) Date of publication of application:
**05.05.93 Bulletin 93/18**

(45) Publication of the grant of the patent:
**13.12.95 Bulletin 95/50**

(84) Designated Contracting States:
**BE DE FR GB NL**

(56) References cited:
**EP-A- 0 145 235**    **EP-A- 0 229 139**
**EP-A- 0 322 241**    **WO-A-85/01942**
**WO-A-87/00079**    **SU-A- 0 147 175**
**US-A- 2 443 817**

(73) Proprietor: **THE BRITISH PETROLEUM COM-
PANY P.L.C.**
**Britannic House,**
**1 Finsbury Circus**
**London EC2M 7BA (GB)**

Proprietor: **BP Chemicals Limited**
**Britannic House**
**1 Finsbury Circus**
**London EC2M 7BA (GB)**

(72) Inventor: **Colman, Derek Alan**
**c/o The British Petr.Comp.p.l.c.,**
**Chertsey Road**
**Sunbury-on-Thames,**
**Middlesex, TW16 7LN (GB)**
Inventor: **Stewart, Douglas, c/o BP Chemicals
Limited**
**Grangemouth Factory,**
**Bo'ness Road**
**Grangemouth,**
**Stirlingshire, FK3 9XH (GB)**
Inventor: **Scotland, James M. c/o BP Chemi-
cals Limited**
**Grangemouth Factory,**
**Bo'ness Road**
**Grangemouth,**
**Stirlingshire, FK3 9XH (GB)**

(74) Representative: **Krishnan, Suryanarayana
Kalyana et al**
**BP INTERNATIONAL LIMITED**
**Patents & Agreements Division**
**Chertsey Road**
**Sunbury-on-Thames**
**Middlesex TW16 7LN (GB)**

**Description**

The present invention relates to a process for producing polyolefins.

It is known to polymerise olefins in the presence of a suitable catalyst system to form polyolefins. In particular, it is known to produce polyisobutene from isobutene in continuous stirred tank reactors in this manner.

Mixing apparatus which comprises a vessel for containing fluent material; means for imposing on the contained material an oscillatory motion in a predetermined direction and a plurality of stationary obstacles located within the vessel in sequence parallel to the direction of oscillation are known. European patent 0 229 139 discloses such mixing apparatus in which the stationary obstacles are of a particular kind. Such apparatus can be used as a continuous reactor in which two or more constituents enter an elongated reactor vessel separately at one end and pass through the reactor in "near plug flow" before leaving it at the other end. "Near plug flow" means that the residence time of all the constituents within the vessel is as uniform as possible.

In this specification such a reactor is referred to as a "pulsatile flow reactor". By imposing an oscillating motion, in addition to the flow along the vessel, upon the fluent material contained within the vessel, the material is caused to cross and re-cross the stationary obstacles thereby providing vigorous mixing.

It has now been found that by polymerising butenes in a pulsatile flow reactor, it is possible to obtain polybutenes having a higher viscosity for a given set of conditions than can be produced by conventionally operated continuous stirred tank reactors. Also, the use of a pulsatile flow reactor can increase the conversion of isobutene to polyisobutene. It may also be possible in some embodiments of the invention to obtain polybutene with a lower dispersion index than is usually obtained by the known processes.

Thus according to the present invention a process for producing polyolefins comprising contacting a hydrocarbon feed comprising an olefin monomer and a catalyst system under polymerisation conditions is characterised in that the polymerisation reaction is carried out in a pulsatile flow reactor.

The hydrocarbon feed suitably contains one or more $C_2$-$C_8$ olefins, preferably ethylene, propylene and/or $C_4$ monomers eg one or more of 1-butene, cis-2-butene, trans-2-butene and isobutene. Such feed can comprise a mixture of butenes and can also contain some butanes. Hydrocarbon feeds containing the butene monomers can be obtained using known processes and techniques such as, for example thermal and catalytic cracking of petroleum and natural gas or catalytic dehydrogenation of n-butane and/or isobutane. Whatever the source of the hydrocarbon feed, at least 5% w/w of such feed suitably comprises olefinic monomers. A preferred feed is a butadiene raffinate (hereafter "BDR") resulting from the thermal or catalytic cracking operation. This BDR is a liquid when under pressure. The feed may contain from 10-100% w/w of isobutene, preferably at least 15% w/w, most preferably at least 40% w/w of isobutene.

Any of the catalyst systems known for polymerising butenes can be used in the process according to the present invention. These are suitably cationic polymerisation catalysts (also known as 'initiators') of the Friedel-Crafts type. Typical of such catalysts are the halides or organo metallic halides of aluminium, iron, zinc, titanium, tin, mercury and boron. These catalysts may be used with small amounts of co-catalysts or co-initiators such as water, alcohol, sulphur dioxide, carboxylic acids, mineral acids, ethers and alkyl halides, especially tertiary alkyl halides to enhance catalyst activity. These and other preformed complex catalysts from boron trifluoride are claimed and described in our published EP-A-145235. They can be used in the conventional quantities, but in at least some embodiments of the present invention smaller quantities may be used.

The polymerisation conditions, temperature and pressure, can be those generally used for the conventional continuous stirred tank reactors (hereafter "CSTR").

The process can also be carried out under conditions of temperature and/or pressure which cannot be used with a CSTR or which would be unlikely to be used in a CSTR. The use of a pulsatile flow reactor enables higher operating temperatures to be used to produce polymers of a viscosity similar to that achieved hitherto at much lower operating temperatures.

This process also enables substantially instantaneous termination of the polymerisation reaction by introducing into the reaction system an agent to kill the inititator/catalyst. Such is not normally feasible in the conventional continuous stirred tank reactors.

The pulsatile flow reactor (hereafter "PUFR") comprises an elongate vessel having inlets at one end for the butene monomer, catalyst system and any other constituents of the reaction and an outlet at the other end, the elongate vessel being provided with means for imposing on the material within the vessel pulsatile motion in a predetermined direction and a plurality of stationary obstacles, i.e. baffles, transverse to the direction of fluid flow. Aliquots of the catalyst composition can be injected at any point along the length of the reactor.

2

The elongate vessel can have any suitable transverse cross-section. The cross-section can be circular in shape.

The baffles can be spaced apart from the inner walls of the elongated vessel. For example, they can be mounted at intervals on a shaft along the vessel. Conveniently, however, the baffles can be mounted on the inner walls of the vessel. Preferably the baffles have sharp edges. For example, they can have a thin rectangular, triangular or diamond lateral cross-section. The baffles can be in the form of flat discs having concentric annular holes which look like washers and are spaced along the vessel. Another embodiment is for the baffles to comprise a thin strip formed into a helix coaxial with the vessel. One long edge of a helix can be attached to the inner wall of the vessel such that the ridges are presented by the opposite long edge and successive complete turns of the helix constitute successive baffles.

The longitudinal spacing between adjacent baffles, i.e. between adjacent rings or the axial distance taken by one 360° turn of the helix, can conveniently be from 0.5 to 4 times the diameter of the vessel. Preferably, the longitudinal spacing is about 1.5 times the diameter.

The cross-sectional area of the vessel taken up by baffles can be from 25 to 75%, preferably 40 to 60%.

The material entering by the inlets causes a unidirectional flow along the vessel and the product is withdrawn from the outlet. Superimposed on this flow is a pulsatile motion. This pulsatile motion can be unidirectional, that is to say the velocity of the fluid in the general direction of flow can vary periodically between a maximum and a minimum. However, the pulsatile flow is preferably oscillatory so that fluid flow reversal takes place; that is to say the velocity of the fluid in the general direction of fluid flow can rise and fall in a continuous manner and pass through a negative value whilst still retaining an average flow along the conduit. The oscillatory fluid flow can be sinusoidal, but other oscillatory forms can be used.

The pulsatile flow can be provided by continuously pumping the fluid along the vessel, e.g. by using a centrifugal or gear pump, and superimposing unidirectional pulses or reciprocating oscillations by use of suitable pumps, valves or other mechanisms. The pulsatile flow can be provided by a piston located so as to constitute an end wall of the vessel. Another example is to use a double piston pump.

The amplitude of the oscillation can be, for example, from 0.05 to 0.5 times the diameter of the vessel.

The PUFR can also be beneficially operated in a batch process.

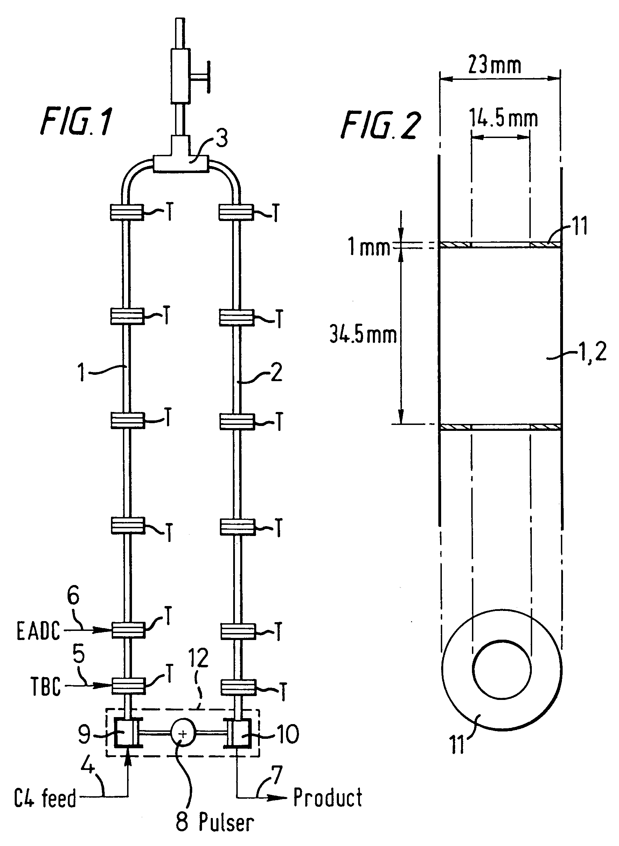

The invention will now be described, by way of example, with reference to the accompanying drawing which is a schematic representation of a pulsatile flow reactor suitable for use in the present invention.

The pulsatile flow reactor comprises two elongate reactor sections (1,2) which are arranged so that their axes are parallel. One end of each of the two tubes is connected together via a connecting conduit (3) so that the pulsatile flow reactor is in the form of a "U". Inlets (4 to 6) are associated with one end of the reactor and there is an outlet (7) at the other end. A pulser unit (12) is provided to superimpose oscillations onto the fluid flow through the reactor and comprises two piston pumps (9,10) driven by a cam (8) and motor (not shown). Baffles (11) are provided along the length of the two reactor sections (1,2). Each baffle (11) comprises a ring which is attached to the inner wall of the reactor sections (1,2). Thermocouple sample points were provided at periodic intervals on each of the two elongate reactors (1,2).

The invention is illustrated by the following examples:

Examples 1 to 3 and Comparative Example A

Three polyisobutenes were prepared according to the process of the present invention.

The pulsatile flow reactor used was substantially the same as described above with reference to the drawing. The diameter of the reactor was 23mm and the baffle spacing was 1.5 times the reactor diameter, i.e. 34.5 mm. The baffles, which were discs of 1 mm thickness with concentric annular holes 14.5 mm in diameter, occupied 60% of the cross-sectional area of the PUFR reactor. The PUFR reactor was made of short and long sections. The short sections (227 mm in length) were placed at the base of each reactor with four long sections (each 588 mm in length) on top of the short sections. The short sections contained 6 baffles each spaced about 34.4 mm apart and the long sections had 16 baffles each spaced about 35.4 mm apart. Each of the sections was externally jacketed for temperature control. 14 mm spacers were placed between the short and long sections for catalyst injection and positioning of the thermocouples. The feed rate of the hydrocarbon feed was 6 litres/hour. The length of the reactor was such that the residence time was 22 minutes. The Pulser unit consisted of two piston pump heads (supplied by Metering Pumps Ltd, UK) and driven by a cam and a variable speed electric motor.

The polyisobutenes were produced by introducing the initiator, (ethyl aluminium dichloride) co-initiator (tert-butyl chloride) and monomer separately into the reactor, operating the pulser unit and periodically collecting polymer samples from the end of the reactor. The reactor temperature was controlled by passing

3

water at a temperature of about 14°C through the reactor jacket. The pulse frequency and pulse amplitude were different for each Example and the values are given in Table 1 below. The polymer samples were then vacuum distilled at 200°C and less than 921 Pa (7 mm Hg) to produce the final polymer.

The molar ratio of initiator to co-initiator was 1:1 and the concentration of the initiator added was 0.64 moles/tonne of monomer. The monomer comprised by weight;

| | |
|---|---|
| 46.69 % | isobutene |
| 24.03 % | 1-butene |
| 11.86 % | n-butane |
| 10.65 % | trans-2-butene |
| 4.11 % | cis-2-butene |
| 2.66 % | isobutane |

The conversion of isobutene to polymer was determined for each example, using a VARIAN 3700 GAs Chromatograph (VARIAN is trade mark) and is given in the Table 1 below together with the viscosity of the final polymer. The viscosity was determined using a Haake viscometer. The accuracy of the viscosity equipment used was checked by using an independent viscosity measuring technique based on ASTM D445. The accuracy of the GC used to obtain conversion results was checked by using an independent Pye Unicam PU 450 GC which in turn was calibrated using a certified calibration blend supplied by the company Gas and Equipment Ltd, Aberdeen, UK.

The isobutene conversion was calculated using the formula

$$\%\text{ISO-butene conversion} = \frac{\dfrac{\%\text{ IB in raffinate 1 (R1)}}{\%(n + i\text{ butane) in R1}} - \dfrac{\%\text{ IB in raffinate 2(R2)}}{\%(n + i\text{ butane) in R2}}}{\dfrac{\%\text{IB in R1}}{(\%n + \%i\text{ butane) in R1}}}$$

For comparison, polyisobutene was prepared from the same monomer composition, initiator and co-initiator and in the same proportions as for Examples 1 to 3 except that the polymerisation was carried out in a continuous stirred tank reactor. The reactor temperature was the same and the residence time was 20 minutes. The isobutene conversion and polymer viscosity are given in Table 1 under Comparison Test A.

TABLE 1

| | Example | | | Comp Test |
|---|---|---|---|---|
| | 1 | 2 | 3 | A |
| Residence Time (mins) | 22 | 22 | 22 | 20 |
| Pulse Amplitude (mm) | 2.3 | 5.3 | 3.8 | - |
| Pulse Frequency (Hz) | 3 | 5 | 4 | - |
| Isobutene Conversion(%) | 73.5 | 76.0 | 88.4 | 19.0 |
| Polymer viscosity ($10^{-3}$ m$^2$/s at 100°C) | 64.7 | 86.9 | 29.2 | 17.0 |

Examples 4 to 10

Polyisobutenes were prepared as described for Examples 1 to 3. The pulse amplitude and pulse frequency used and the isobutene conversion and final polymer viscosity are given in Table 2. In Example 10, the initiator concentration was increased from 0.64 moles/tonne of monomer to 0.89 moles/tonne.

4

EP 0 540 180 B1

TABLE 2

| | EXAMPLES | | | | | | |
|---|---|---|---|---|---|---|---|
| | 4 | 5 | 6 | 7 | 8 | 9 | 10 |
| Pulse Amplitude (mm) | 5.3 | 5.3 | 3.8 | 3.8 | 2.3 | 2.3 | 2.3 |
| Pulse Frequency (Hz) | 3 | 4 | 3 | 5 | 4 | 5 | 3 |
| Isobutene Conversion (%) | 45 | 20 | 60 | 24 | 21 | 17 | 60 |
| Polymer viscosity ($10^{-3}$ $m^2$/s at 100 °C) | 64.0 | 68.0 | 24.8 | 54.2 | 35.2 | 35.5 | 29.7 |

Examples 11 and 12 and Comparative Example

For Examples 11 and 12 the reactor design, its operating procedure and the C4 composition were identical to that detailed in Examples 1 to 3 above except that the initiator and coinitiator were introduced together as a preformed complex (boron trifluoride-ethanol complex (0.9:1 molar) of 1.25 g/ml density).

For comparison a CSTR system was used (Comparison Test B) with a feed composition as given below:

40.57% isobutene
21.74% 1-butene
18.8 % n-butene
12.20% trans-2-butene
3.32% cis-2-butene
3.3 % isobutane

The results are tabulated below:

| | Example 11 | Example 12 | Comparison Test B |
|---|---|---|---|
| Reactor temperature (°C) | 17 | 17 | 23 |
| Reactor residence time (minutes) | 22 | 22 | 30 |
| Concentration of initiator (moles/tonne of monomer) | 7 | 5 | 43 |
| Pulse frequency (Hz) | 5 | 5 | - |
| Pulse amplitude (mm) | 5.3 | 5.3 | - |
| Isobutene conversion to polymer (%) | 60 | 60 | 7 |
| Viscosity of final polymer (cSt at 100 °C) | 88 | 98 | not available |

**Claims**

1. A process for producing polyolefins by contacting a hydrocarbon feed comprising an olefin monomer and a catalyst system under polymerisation conditions, characterised in that the polymerisation reaction is carried in a pulsatile flow reactor which is an elongate tubular vessel of circular cross section and is provided baffles mounted on the inner walls of the vessel and projecting in a direction transverse to the walls of the vessel, said baffles being spaced at period intervals along the length of the vessel.

2. A process according to Claim 1 wherein the hydrocarbon feed comprises one or more $C_2$-$C_8$ olefins.

3. A process according to Claim 1 or 2 wherein the hydrocarbon feed comprises $C_4$ olefins.

4. A process according to any one of the preceding Claims wherein the catalyst system used comprises a cationic polymerisation catalyst system of the Friedel-Crafts type.

5. A process according to Claim 1 wherein the baffles have a thin rectangular, triangular or diamond-shaped lateral cross-section or is in the form of a thin strip formed into a helix coaxial with the vessel.

6. A process according to Claim 1 or 5 wherein the baffles are in the form of flat discs having concentric annular holes which have the appearance of washers.

5

7. A process according to any one of the preceding Claims 5-6 wherein the longitudinal spacing between adjacent baffles or the axial distance taken by one 360° turn of the helix is from 0.5 to 4 times the diameter of the vessel.

8. A process according to any one of the preceding Claims wherein the cross-sectional area of the vessel taken up by the baffles is from 25% to 75%.

9. A process according to any one of the preceding Claims 5-8 wherein the pulsatile flow of the reactants into the reactor is created by oscillatory flow of fluids through the reactor, the amplitude of said oscillation being from 0.05 to 0.5 times the diameter of the vessel.

**Patentansprüche**

1. Verfahren zur Herstellung von Polyolefinen durch Inkontaktbringen einer Kohlenwasserstoff-Zufuhr umfassend ein Olefinmonomer und ein Katalysatorsystem unter Polymerisationsbedingungen, **dadurch gekennzeichnet**, daß die Polymerisationsumsetzung in einem Pulsationsdurchflußreaktor durchgeführt wird, der ein länglicher röhrenförmiger Behälter von kreisförmigem Querschnitt ist und mit Ablenkmitteln versehen ist, die auf den Innenwänden des Behälters angebracht sind und in eine Richtung hervorragen, die transversal zu den Wänden des Behälters ist, wobei die Ablenkmittel in periodischen Abständen entlang der Länge des Gefässes verteilt sind.

2. Verfahren nach Anspruch 1, wobei die Kohlenwasserstoff-Zufuhr ein oder mehrere $C_2$-$C_8$-Olefine umfaßt.

3. Verfahren nach Anspruch 1 oder 2, wobei die Kohlenwasserstoff-Zufuhr $C_4$-Olefine umfaßt.

4. Verfahren nach einem der vorhergehenden Ansprüche, wobei das verwendete Katalysatorsystem ein kationisches Polymerisationskatalysatorsystem vom Friedel-Crafts-Typ umfaßt.

5. Verfahren nach Anspruch 1, wobei die Ablenkmittel einen dünnen rechteckigen, dreieckigen oder rautenförmigen seitlichen Querschnitt besitzen oder in der Form eines dünnen Streifens sind, der zu einer Helix, koaxial mit dem Behälter, geformt ist.

6. Verfahren nach Anspruch 1 oder 5, wobei die Ablenkmittel in der Form von flachen Scheiben mit konzentrischen ringförmigen Löchern sind, die das Aussehen von Unterlegscheiben besitzen.

7. Verfahren nach einem der vorhergehenden Ansprüche 5 - 6, wobei der longitudinale Abstand zwischen benachbarten Ablenkmitteln oder der Achsenabstand, der von einer 360°-Windung der Helix eingenommen wird, das 0,5- bis 4-fache des Durchmessers des Behälters ist.

8. Verfahren nach einem der verhergehenden Ansprüche, wobei die Querschnittsfläche des Behälters, die von den Ablenkmitteln eingenommen wird, 25% bis 75% ist.

9. Verfahren nach einem der vorhergehenden Anprüche 5 - 8, wobei der Pulsationsfluß der Reaktanten in den Reaktor hervorgerufen wird durch Schwingungsfluß von Fluiden durch den Reaktor, wobei die Amplitude der Schwingung das 0,05- bis 0,5-fache des Durchmessers des Behälters ist.

**Revendications**

1. Procédé de production de polyoléfines par mise en contact d'une charge d'hydrocarbures comprenant un monomère oléfinique et d'une formulation de catalyseur dans des conditions de polymérisation, caractérisé en ce que la réaction de polymérisation est conduite dans un réacteur à écoulement pulsé qui consiste en un récipient tubulaire allongé ayant une section transversale circulaire et qui est muni de chicanes montées sur les parois intérieures du récipient et faisant saillie dans une direction transversale aux parois du récipient, lesdites chicanes étant espacées à des intervalles périodiques le long du récipient.

**2.** Procédé suivant la revendication 1, dans lequel la charge d'hydrocarbures comprend une ou plusieurs oléfines en $C_2$ à $C_8$.

**3.** Procédé suivant la revendication 1 ou 2, dans lequel la charge d'hydrocarbures comprend des oléfines en $C_4$.

**4.** Procédé suivant l'une quelconque des revendications précédentes, dans lequel la formulation de catalyseur utilisée consiste en une formulation de catalyseur de polymérisation cationique du type Friedel-Crafts.

**5.** Procédé suivant la revendication 1, dans lequel les chicanes ont une section transversale latérale rectangulaire, triangulaire ou de forme hexagonale mince ou bien sont sous forme d'une bande mince en forme d'hélice coaxiale avec le récipient.

**6.** Procédé suivant la revendication 1 ou 5, dans lequel les chicanes sont sous forme de disques plats portant des trous annulaires concentriques, qui ont l'aspect de rondelles.

**7.** Procédé suivant l'une quelconque des revendications 5 et 6 précédentes, dans lequel l'espacement longitudinal entre les chicanes adjacentes ou la distance axiale parcourue par un tour sur un angle de 360° de l'hélice représente 0,5 à 4 fois le diamètre du récipient.

**8.** Procédé suivant l'une quelconque des revendications précédentes, dans lequel la surface de section transversale du récipient occupée par les chicanes va de 25 % à 75 %.

**9.** Procédé suivant l'une quelconque des revendications 5 à 8 précédentes, dans lequel l'écoulement pulsé des corps réactionnels dans le réacteur est engendré par un mouvement oscillant des fluides à travers le réacteur, l'amplitude de ladite oscillation représentant 0,05 à 0,5 fois le diamètre du récipient.

FIG.1

FIG.2